## Europäisches Patentamt

## European Patent Office

## Office européen des brevets

(19)

(11) Numéro de publication : **0 204 113**
**B1**

(12) **FASCICULE DE BREVET EUROPÉEN**

(45) Date de publication du fascicule du brevet :
28.09.88

(51) Int. Cl.⁴ : **F 16 L 59/16**

(21) Numéro de dépôt : **86105224.9**

(22) Date de dépôt : **16.04.86**

(54) **Joint d'étanchéité aux fluides extérieurs à une canalisation pour la jonction de deux tuyaux à bout mâle et emboîtement calorifugés.**

(30) Priorité : **03.05.85 FR 8506898**

(43) Date de publication de la demande :
**10.12.86 Bulletin 86/50**

(45) Mention de la délivrance du brevet :
**28.09.88 Bulletin 88/39**

(84) Etats contractants désignés :
**AT CH DE FR GB IT LI NL SE**

(56) Documents cités :
**FR-A- 1 278 152**
**FR-A- 2 395 456**
**FR-A- 2 445 925**
**US-A- 4 325 572**

(73) Titulaire : **PONT-A-MOUSSON S.A.**
**91, Avenue de la Libération**
**F-54017 Nancy (FR)**

(72) Inventeur : **Bucher, Claude**
**5, rue de l'Imagerie**
**F-54700 Pont-A-Mousson (FR)**
Inventeur : **Lagabe, André**
**20, rue de la Mairie Montauville**
**F-54700 Pont-A-Mousson (FR)**

(74) Mandataire : **Puit, Thierry et al**
**c/o Centre de Recherches de Pont-à-Mousson B.P. 28**
**F-54703 Pont-à-Mousson Cedex (FR)**

Jouve, 18, rue St-Denis, 75001 Paris, France

EP 0 204 113 B1

## Description

La présente invention est relative à un joint d'étanchéité aux fluides extérieurs à une canalisation pour la jonction de deux tuyaux en fonte à bout mâle et emboîtement. Elle s'applique à des tuyaux destinés au transport d'eau chaude, présentant, sur la plus grande partie de leur longueur, un revêtement externe constitué d'une couche d'une mousse thermiquement isolante limitée extérieurement par une enveloppe externe de protection imperméable aux fluides, les extrémités, côté bout mâle et emboîtement, de chaque tuyau, étant dépourvues de ce revêtement externe.

L'invention a plus particulièrement pour objet un anneau d'étanchéité prévenant la pénétration, par les tranches d'extrémités des tuyaux, de l'humidité extérieure à la canalisation à l'intérieur de la couche de mousse isolante, afin d'éviter la dégradation de cette dernière.

On connaît par le brevet FR-A-2 445 925 un joint d'étanchéité pour tuyaux calorifugés de ce type, dans lequel ne sont utilisés que des pièces de fabrication courante et pour lequel une légère déviation angulaire est possible. Ce joint comporte un manchon extérieur rigide, en amiante-ciment, dont la protubérance relativement importante par rapport à l'enveloppe externe de protection du matériau de calorifugeage, peut être une gêne en cas de frottement du joint d'étanchéité ou de l'assemblage des tuyaux sur le sol. De plus ce manchon extérieur rigide qui coiffe les deux extrémités des enveloppes tubulaires externes des tuyaux composites assemblés nécessite l'interposition de rondelles d'étanchéité (entre manchon et enveloppes externes), pour préserver la couche de calorifugeage de l'humidité externe.

On connaît par le brevet US-A-3 563 572 un assemblage télescopique étanche et composite de tuyaux métalliques calorifugés à enveloppe tubulaire externe rigide protégeant une couche de calorifugeage. Dans cet assemblage, un manchon annulaire rigide interne de verrouillage, en matériau isolant revêtu d'une coiffe élastique d'étanchéité, fait la jonction entre les deux tuyaux composites sans protubérance par rapport aux enveloppes externes. Mais, outre qu'un tel assemblage n'est pas applicable à des tuyaux en fonte à emboîtement, il ne se prête pas à des déviations angulaires de l'un des tuyaux composites par rapport à l'autre, d'abord en raison de l'interposition de ce manchon rigide de verrouillage et ensuite en raison de l'appui de ce manchon rigide de verrouillage uniquement sur des surfaces annulaires transversales de la couche de calorifugeage : une déviation angulaire du manchon rigide de verrouillage par rapport à la couche de calorifugeage ferait perdre cet appui transversal, d'où un risque de perte d'étanchéité, c'est-à-dire de protection de la couche de calorifugeage contre l'humidité extérieure. Ce risque, en cas de légère déviation angulaire, est d'autant plus probable qu'aucun serrage radial extérieur, ou frettage, n'est possible entre ledit manchon interne rigide de verrouillage et l'enveloppe tubulaire externe rigide recouvrant la couche de calorifugeage.

La Demanderesse s'est donc posé le problème de créer un joint d'étanchéité pour le raccordement de deux tuyaux à bout mâle et emboîtement, présentant un revêtement externe d'isolation thermique, destinés au transport d'eau chaude, interdisant la pénétration de fluides externes à la canalisation à l'intérieur du revêtement d'isolation thermique, mais autorisant la dilatation thermique du revêtement isolant externe et du tuyau en fonte ainsi qu'une déviation angulaire et une excentration d'un tuyau à raccorder par rapport à l'autre, avec minimum de perte de calories à la jonction de ces deux tuyaux à raccorder et sans protubérance importante par rapport aux enveloppes tubulaires externes.

La présente invention qui résout ce problème a donc pour objet un joint d'étanchéité aux fluides extérieurs entre deux tuyaux calorifugés composites comprenant chacun un tuyau en fonte à bout mâle et emboîtement assemblables entre eux de manière télescopique avec interposition d'une garniture d'étanchéité à la pression interne du fluide transporté, chaque tuyau en fonte étant calorifugé par une couche de calorifugeage en matériau thermiquement isolant, et la couche de calorifugeage revêtant la plus grande partie de la longueur de chaque tuyau à l'exception du bout mâle et de l'extrémité de la tulipe de l'emboîtement, la couche de calorifugeage étant elle-même recouverte d'une enveloppe tubulaire externe protectrice imperméable, ladite couche de calorifugeage étant en outre limitée à chacune de ses extrémités par une bague d'étanchéité en élastomère obturant de manière étanche l'espace annulaire entre le tuyau en fonte et l'enveloppe protectrice, ce joint d'étanchéité étant caractérisé en ce que l'une des bagues d'étanchéité obturant l'espace annulaire entre un tuyau en fonte et son enveloppe tubulaire externe protectrice à une extrémité de la couche de calorifugeage de l'un des tuyaux composites comporte un talon d'ancrage prenant appui sur la surface extérieure de l'emboîtement et comprimé radialement entre l'emboîtement et l'enveloppe protectrice, puis dans le prolongement longitudinal du talon d'ancrage un corps d'étanchéité appliqué contre l'emboîtement et affleurant l'enveloppe tubulaire externe, enfin dans le prolongement longitudinal du corps d'étanchéité, une jupe de recouvrement appliquée élastiquement, avec serrage, sur l'extrémité de l'enveloppe tubulaire externe du tuyau composite adjacent.

D'autres caractéristiques et avantages apparaîtront au cours de la description qui va suivre faite en référence aux dessins annexés donnés uniquement à titre d'exemple non limitatif.

La Fig. 1 est une vue partielle en coupe longitudinale d'un tuyau calorifugé muni de l'anneau d'étanchéité selon l'invention ;

La Fig. 2 est une vue partielle en coupe longitudinale illustrant le joint d'étanchéité selon l'invention ;

La Fig. 3 est une vue partielle en coupe méridienne de l'anneau d'étanchéité selon l'invention ;

La Fig. 4 est une vue partielle en coupe longitudinale illustrant le montage du joint selon l'invention ;

La Fig. 5 est une vue en coupe longitudinale du joint d'étanchéité selon l'invention dans le cas d'une excentration maximale et d'une déviation angulaire maximale d'un tuyau à raccorder par rapport à l'autre.

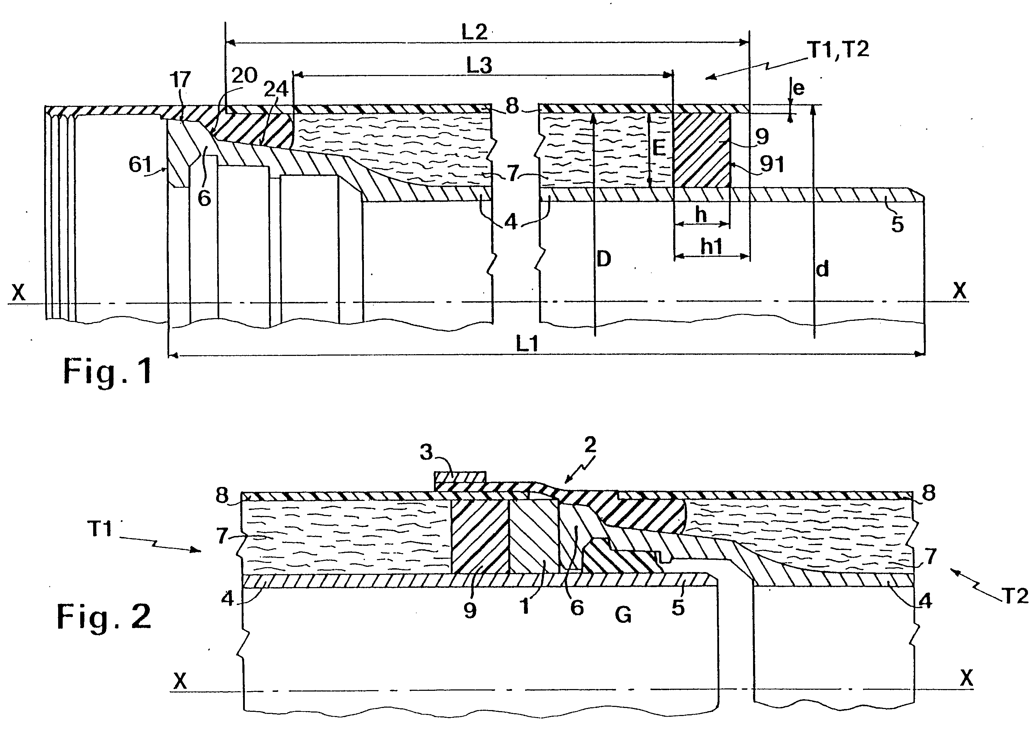

Comme on le voit à la Fig. 2, le joint d'étanchéité selon l'invention pour le raccordement de deux tuyaux composites calorifugés T1 et T2 d'axe XX, réalisés à partir de tuyaux en fonte 4 à bout mâle 5 et emboîtement 6, est constitué d'une garniture d'étanchéité G de type connu, à compression radiale entre un bout mâle 5 et un emboîtement 6 de deux tuyaux 4 et à talon d'ancrage dans l'emboîtement 6 d'un tuyau 4, d'une entretoise 1 entre un tuyau 4 et une enveloppe externe ou gaine, d'un anneau d'étanchéité 2 en élastomère, par exemple, d'une dureté de 60° à 70° Shore, pour assurer la jonction étanche entre les enveloppes externes des couches de calorifugeage recouvrant les tuyaux 4 et d'une bague 3 de serrage dudit anneau 2 sur une enveloppe externe.

Comme représenté plus particulièrement à la Fig. 1 chaque tuyau composite calorifugé T1, T2, est constitué à partir d'un tuyau en fonte 4 à bout mâle 5 et emboîtement 6, destiné à transporter de l'eau chaude, ou un fluide analogue, à une température pouvant atteindre 130 °C. Ce tuyau en fonte 4 est revêtu d'une couche 7 externe de calorifugeage, de diamètre externe D, constituée d'un matériau isolant, tel que par exemple une mousse de polyuréthane, elle-même entourée par une enveloppe externe protectrice 8, imperméable aux fluides, par exemple constituée d'une gaine de polyéthylène haute densité, de diamètre interne D correspondant au diamètre externe D de la couche 7 de matériau isolant. Comme on le voit à la Fig. 2, l'enveloppe protectrice 8 ainsi que la couche 7 de matériau isolant s'arrêtent à proximité de chacune des extrémités des tuyaux 4 assemblés, sans les dépasser. De plus l'enveloppe protectrice 8 a une longueur L2 inférieure à la longueur L1 de chaque tuyau en fonte 4 du tuyau T1, T2, mais supérieure à la longueur L3 de la couche 7 de matériau isolant, et l'enveloppe protectrice 8 dépasse une bague obturatrice d'étanchéité 9 (entre tuyau 4 et enveloppe protectrice 8) d'une longueur h1, côté bout mâle 5 du tuyau en fonte 4, dans le sens axial, de la couche 7 de matériau isolant.

L'enveloppe 8 recouvre ainsi la bague obturatrice d'étanchéité 9. La couche 7 de matériau isolant est donc limitée sur sa tranche d'extrémité, côté bout mâle 5 du tuyau en fonte 4 du tuyau T1, T2, par une bague obturatrice d'extrémité 9 en élastomère de diamètre externe D, et d'épaisseur radiale E correspondant à l'épaisseur radiale de la couche 7 de matériau isolant à cet endroit, cette bague 9 d'extrémité ayant une face plane d'extrémité 91.

Par ailleurs la longueur axiale h de cette bague d'extrémité 9 est inférieure à la longueur h1, du dépassement longitudinal de la couche 7 de matériau isolant par l'enveloppe protectrice 8 à l'extrémité du tuyau composite T1, T2 côté bout mâle 5 du tuyau en fonte 4.

Enfin, chaque tuyau composite T1, T2, présente à son extrémité côté emboîtement 6, un anneau d'étanchéité 2 interposé entre l'emboîtement 6 et l'enveloppe externe protectrice 8 ; à une extrémité de la couche de calorifugeage 7.

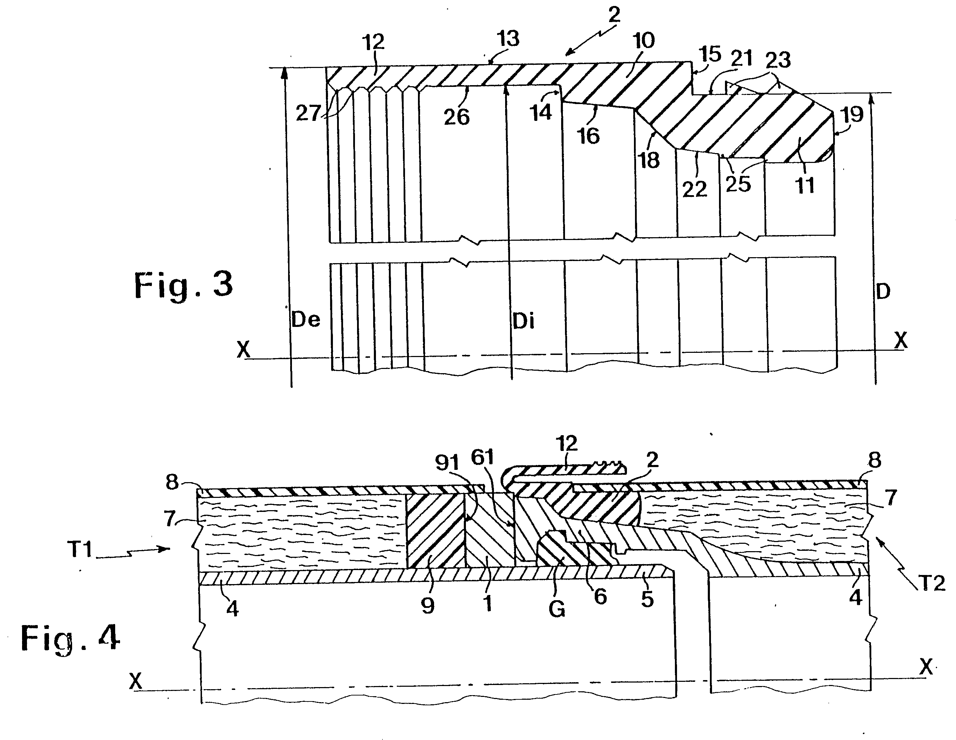

Comme on le voit plus particulièrement à la Fig. 3, cet anneau d'étanchéité 2, en élastomère, d'axe XX, de forme générale allongée, en coupe méridienne, est constitué d'un corps 10 de section méridienne trapézoïdale avec lequel viennent de matière, et en prolongement longitudinal de part et d'autre de ce corps 10, un talon d'ancrage 11 et une jupe de recouvrement 12.

Ce corps 10 est limité par une surface externe cylindrique 13, d'axe XX, et de diamètre De, par deux faces planes ou épaulements 14 et 15, perpendiculaires à l'axe XX, et par une surface interne 16, pouvant être cylindrique ou légèrement tronconique ou d'une autre forme, mais dont le profil correspond à celui d'une surface externe 17 d'extrémité ou de collerette de l'emboîtement 6.

Le diamètre De de la surface 13 est supérieur ou égal au diamètre externe de l'enveloppe protectrice 8 et la hauteur radiale de la face 15 est supérieure ou égale à l'épaisseur e de l'enveloppe protectrice 8, le diamètre interne de la surface 15 correspondant au diamètre interne D de l'enveloppe protectrice 8.

De la surface interne 16 du corps 10 part le talon d'ancrage 11 limité longitudinalement par une surface interne tronconique 18, se raccordant à la surface 16, et par une surface d'extrémité 19, pouvant être de section méridienne droite ou courbe. Le profil de la surface interne 18 correspond au profil d'une surface externe évasée 20 de l'emboîtement 6.

Par ailleurs le talon d'ancrage 11 est limité radialement par une surface externe 21 et une surface interne 22. Cette surface externe 21, cylindrique d'axe XX, se raccorde à la face 15 du corps 10 et est d'un diamètre D correspondant au diamètre interne de l'enveloppe protectrice 8.

Cette surface externe 21 présente en saillie une ou plusieurs lèvres ou dents 23, au nombre de deux suivant le mode de réalisation préférentiel représenté à la Fig. 3, de section méridienne triangulaire dont les sommets ont, bien entendu, un diamètre externe supérieur au diamètre D de la surface 21.

La surface interne 22 est d'un profil général tronconique correspondant au profil d'une surface externe évasée 24 de l'emboîtement 6 et présente des saillies 25, triangulaires profilées en marches d'escalier, au nombre de deux suivant l'exemple de réalisation préférentiel représenté à la Fig. 3.

Les lèvres externes 23 et les saillies internes triangulaires 25, présentent, de préférence du côté du corps 10 plutôt que de la tranche d'extrémité 19, comme illustré à la Fig. 3, une face perpendiculaire à l'axe XX.

Ainsi, le profil interne du corps 10 et du talon d'ancrage 11, de l'anneau d'étanchéité 2, constitué par les surfaces 16, 18 et 22, correspond au profil externe évasé en tulipe de l'emboîtement 6 constitué par les surfaces 17, 20 et 24.

Par ailleurs la surface externe 13 du corps 10 se prolonge axialement, en direction opposée de celle du talon d'ancrage 11 et constitue la surface externe de la jupe de recouvrement 12. Cette jupe 12 est limitée intérieurement par une surface 26 cylindrique, d'axe XX, se raccordant à la surface transversale ou à l'épaulement 14 du corps 10. La surface interne 26 comporte à son extrémité la plus éloignée de l'épaulement 14 et du corps 10 des saillies annulaires 27, de section méridienne triangulaire, au nombre de cinq selon le mode de réalisation préférentiel représenté Fig. 3.

Le diamètre interne Di de la jupe 12, c'est-à-dire le diamètre de la surface 26, est inférieur au diamètre externe d, égal à (D + 2e), de l'enveloppe protectrice 8.

En résumé (Fig. 1), dans un tuyau composite T1 ou T2, à l'état libre avant assemblage, la couche épaisse de calorifugeage 7 ne recouvre pas entièrement le tuyau en fonte 4 mais seulement une partie de l'emboîtement 6 et laissant à nu le bout mâle 5. L'enveloppe externe protectrice 8 recouvre toute la couche de calorifugeage 7 et la dépasse longitudinalement. A une extrémité, la couche de calorifugeage 7 est limitée par une bague d'extrémité obturatrice 9. A l'autre extrémité la couche de calorifugeage 7 est limitée par le talon d'ancrage 11 de l'anneau d'étanchéité 2 prenant appui sur l'emboîtement 6. Quant à la jupe de recouvrement 12 elle se prolonge bien au-delà de la collerette 17 de l'emboîtement 6, en surplomb de celui-ci.

Montage et fonctionnement du joint selon l'invention :

a) Confection d'un tuyau composite T1 ou T2 à partir d'un tuyau en fonte 4 (FIG.1).

L'anneau d'étanchéité 2 est placé contre l'emboîtement 6, les surfaces internes 16, 18 et 22 de l'anneau 2 sont alors en contact d'appui avec les surfaces externes correspondantes 17, 20 et 24 de l'emboîtement 6. Puis, après avoir mis en place la bague obturatrice d'extrémité 9, on applique la surface interne de l'enveloppe protectrice 8 contre la surface externe 21 du talon d'ancrage 11 de l'anneau 2 et contre la surface cylindrique externe de la bague obturatrice d'extrémité 9, l'extrémité de l'enveloppe protectrice 8 étant en contact avec la surface transversale 15 du corps 10 de l'anneau 2. Les lèvres externes 23 et les saillies 25 internes du talon 11 sont alors écrasées respectivement contre la surface interne de l'enveloppe protectrice 8 et la surface externe de l'emboîtement 6 (compression radiale du talon d'ancrage 11 entre l'emboîtement 6 et l'enveloppe 8). Ceci permet donc à la fois d'assurer l'étanchéité entre la couche 7 non encore appliquée et l'enveloppe 8 et entre l'emboîtement 6 et la couche 7 ainsi qu'un maintien efficace contre un éventuel arrachement du talon d'ancrage 11 hors du tuyau composite T1, T2 grâce aux faces perpendiculaires à l'axe XX des saillies 25 et des lèvres 23. Puis, après avoir percé un orifice dans l'enveloppe protectrice 8, on procède au remplissage de l'espace compris entre l'enveloppe protectrice 8 et le tuyau en fonte 4 par le matériau d'isolation thermique (couche de calorifugeage 7) par l'orifice ménagé dans l'enveloppe 8. Puis on rebouche cet orifice par un bouchon étanche. Le tuyau composite calorifugé T1, T2, est alors prêt à être livré sur chantier.

b) Confection du joint d'étanchéité entre deux tuyaux composites T1 et T2 (FIG. 2 et 4)

Une entretoise 1, constituée de deux demi-coquilles ou d'un anneau complet fendu ou non, est placée contre le bout uni 5 en contact avec la face 91 de la bague obturatrice d'extrémité 9 de la couche 7 de matériau isolant. Cette entretoise 1 est constituée d'un matériau d'isolation thermique tel que par exemple une mousse de nitrile ou de néoprène.

Les diamètres interne et externe de l'entretoise 1 sont tels que celle-ci remplit l'espace annulaire entre le bout mâle 5 du tuyau en fonte 4 et l'enveloppe externe 8. Ainsi l'entretoise 1 a à peu près la même épaisseur que la couche de calorifugeage 7.

Dans le même temps, la jupe 12 est repliée ou retroussée, vers l'extérieur, en direction de l'enveloppe protectrice 8 du tuyau T2 (Fig. 4) pour être rabattue sur ladite enveloppe 8.

Puis on introduit le tuyau T1 dans le tuyau T2, après avoir mis en place la garniture d'étanchéité G dans son logement ménagé à l'intérieur de l'emboîtement 6. Le bout mâle 5 du tuyau en fonte 4 du tuyau T1 pénètre à l'intérieur de l'emboîtement 6 du tuyau en fonte 4 du tuyau T2, jusqu'à ce que l'entretoise 1 soit en contact par sa face latérale encore libre avec la tranche d'extrémité 61 de l'emboîtement 6 contre laquelle elle bute. Les deux tuyaux T1 et T2 sont alors en place et on peut alors déplier la jupe 12 en appliquant sa surface interne 26 contre la surface externe de l'enveloppe protectrice 8 du tuyau T1 qui se trouve ainsi recouverte. Il est possible d'interposer un mastic entre la surface externe de l'enveloppe 8 et la surface interne 26 de la jupe 12. Le diamètre de la surface interne 26 étant inférieur au diamètre externe de l'enveloppe 8, la jupe tend naturellement à se serrer contre l'enveloppe protectrice 8, les saillies 27 étant alors comprimées. Puis pour parfaire le serrage de cette jupe 12 contre l'enveloppe protectrice 8, on frette cette jupe 12 à son extrémité, au droit de la zone présentant les saillies 27, par une bague de serrage 3 constituée par exemple d'un bracelet

en caoutchouc et dont le diamètre est inférieur au diamètre externe de l'enveloppe protectrice 8.

Le montage du joint est alors terminé.

c) Transport d'eau chaude

En fonctionnement la canalisation constituée par un certain nombre de tuyaux composites T1, T2, assemblés comme décrit, transporte de l'eau chaude ou un fluide analogue à des températures pouvant atteindre 130 °C. Ceci entraîne une dilatation longitudinale de la couche 7 de matériau isolant de l'enveloppe protectrice 8 et du tuyau en fonte 4. Cette dilatation entraîne à son tour une compression axiale de l'entretoise 1 entre la bague d'extrémité élastique 9 et la tranche d'extrémité de l'emboîtement 6. Inversement, lors de l'arrêt de circulation d'eau chaude dans la canalisation, ou bien quand celle-ci est vidée, la couche de calorifugeage 7, l'enveloppe 8 et le tuyau en fonte 4 se rétractent longitudinalement et l'entretoise 1 qui n'est plus comprimée axialement reprend ses dimensions initiales tout en restant appliquée contre la tranche d'extrémité de l'emboîtement 6 et contre la face 91 de la bague d'extrémité 9.

Ainsi grâce à cette entretoise 1, l'espace compris entre la face 91 de la pièce d'extrémité 9 et la tranche d'extrémité 61 de l'emboîtement 6 est toujours occupé par un matériau isolant ce qui permet à la fois d'éviter une condensation dans cet espace et de maintenir une continuité thermique entre les tuyaux T1 et T2 raccordés, tout en permettant une dilatation de la couche 7 de matériau isolant et de l'enveloppe protectrice 8 lors de la circulation d'eau chaude dans la canalisation.

D'autre part, l'étanchéité aux fluides extérieurs à la canalisation, étant assurée par le contact radial de l'anneau d'étanchéité 2 avec les surfaces tronconiques 17, 20 et 24 longitudinales des tuyaux T1, T2 et non avec des surfaces planes perpendiculaires à l'axe XX, ceci permet un serrage radial et efficace des surfaces internes 16, 18 et 22 de cet anneau 2 contre les surfaces externes correspondantes 17, 20, 24 de l'emboîtement 6 du tuyau en fonte 4 de chaque tuyau composite T1, T2 correspondantes, contrairement à ce qui se passe lorsque l'étanchéité est assurée par un simple contact ou serrage axial des surfaces perpendiculaires à l'axe XX, donc sans possibilité de serrage radial.

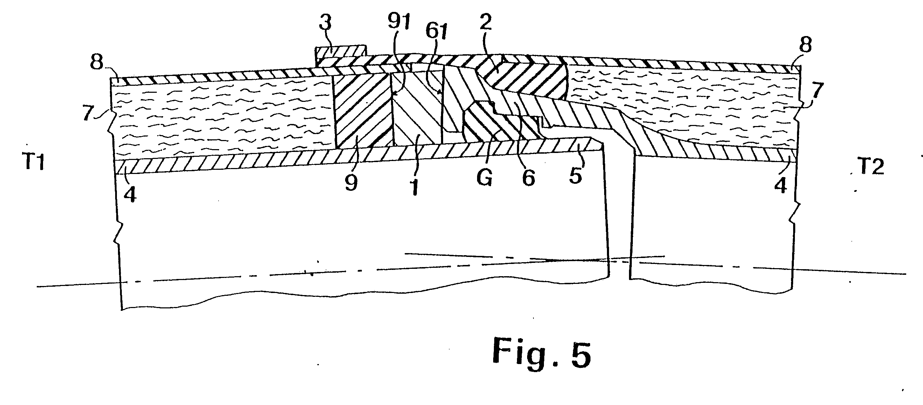

Par ailleurs l'étanchéité aux fluides extérieurs à la canalisation est assurée par un simple anneau d'étanchéité 2, en élastomère, dont le corps 10 n'est nullement bridé extérieurement ni recouvert par une enveloppe externe 8 et est capable de jouer le rôle d'une sorte de charnière élastique de flexion. Ceci permet une déviation angulaire de quelques degrés entre les tuyaux T1, T2 raccordés ainsi qu'une excentration maximale entre ces deux tuyaux (Fig. 5), cette légère déviation ou excentration étant encaissée par le seul corps 10 de l'anneau 2 sans modification de l'assemblage étanche d'une part du talon d'ancrage 11 avec l'emboîtement 6 et l'enveloppe 8, d'autre part de la jupe de recouvrement 12 et de l'enveloppe 8.

Grâce à l'entretoise 1 jouant le rôle de cale axiale entre la bague 9 et la tranche d'extrémité de l'emboîtement 6, la pénétration du tuyau T1 dans le tuyau T2 est limitée axialement ce qui évite d'amener l'extrémité d'une enveloppe externe 8 au contact de l'anneau 2 donc de la comprimer axialement et de la plisser ou de la détériorer.

Ainsi grâce à l'étanchéité réalisée entre la face 21 du corps 11 et la surface interne de l'enveloppe 8, d'une part, et entre la surface 26 de la jupe 12 et la surface externe de l'enveloppe 8, d'autre part, aucune humidité ne peut venir, de l'extérieur de la canalisation, en contact avec la bague 1, et ne peut donc pénétrer à l'intérieur de la couche de calorifugeage 7 par les tranches d'extrémités de celle-ci.

En variante, l'anneau d'entretoise 1 peut être supprimé. Dans ce cas on veille à limiter la pénétration axiale du bout mâle 5 dans l'emboîtement 6 à travers la garniture G, par exemple en traçant un repère sur le bout mâle 5.

Enfin, l'anneau d'étanchéité 2 étant monté en usine sur les tuyaux T1 et T2, ceci permet de livrer sur chantier un tuyau T1, T2 (Fig. 1) muni de son dispositif d'étanchéité aux fluides externes qui protège la couche de calorifugeage 7. Le raccordement étanche des deux tuyaux T1, T2 ne nécessite plus que l'interposition éventuelle de l'entretoise 1. L'anneau d'étanchéité 2 et le joint d'étanchéité selon l'invention constituent donc un moyen très simple de réaliser sur chantier une bonne étanchéité aux fluides extérieurs à la canalisation pour des tuyaux calorifugés.

**Revendications**

1. Joint d'étanchéité aux fluides extérieurs entre deux tuyaux calorifugés composites (T1, T2) comprenant chacun un tuyau en fonte (4) à bout mâle (5) et emboîtement (6) assemblables entre eux de manière télescopique avec interposition d'une garniture (G) d'étanchéité à la pression interne du fluide transporté, chaque tuyau en fonte (4) étant calorifugé par une couche de calorifugeage (7) en matériau thermiquement isolant et la couche de calorifugeage (7) revêtant la plus grande partie de la longueur de chaque tuyau (4) à l'exception du bout mâle et de l'extrémité de la tulipe de l'emboîtement, la couche de calorifugeage (7) étant elle-même recouverte d'une enveloppe tubulaire externe protectrice imperméable (8), ladite couche de calorifugeage (7) étant en outre limitée à chacune de ses extrémités par une bague d'étanchéité en élastomère (9, 2) obturant de manière étanche l'espace annulaire entre le tuyau en fonte (4) et l'enveloppe protectrice (8), ce joint d'étanchéité étant caractérisé en ce que l'une (2) des bagues d'étanchéité obturant l'espace annulaire entre un tuyau en fonte (4) et son enveloppe tubulaire externe protectrice (8) à une extrémité de la couche de calorifugeage (7) de l'un des tuyaux composites (T2) comporte un talon d'ancrage (11) prenant appui sur la surface extérieure (17-20-24) de l'emboîtement (6) et comprimé radialement entre l'emboîtement (6) et l'enveloppe protectrice (8), puis dans le prolongement longitudinal du talon d'ancrage (11) un corps d'étanchéité (10) appliqué contre l'emboîtement (6) et affleurant l'enveloppe tubulaire externe (8), enfin dans le prolongement longitudinal du corps d'étanchéité (10), une jupe de recouvrement (12) appliquée élastiquement, avec serrage, sur l'extrémité de l'enveloppe tubulaire externe (8) du tuyau composite adjacent (T1).

2. Joint d'étanchéité selon la revendication 1 caractérisé en ce que le corps d'étanchéité (10) de l'anneau d'étanchéité (2) comporte une surface externe cylindrique (13) affleurant la surface externe de l'enveloppe tubulaire externe (8) et un épaulement externe (15) de hauteur radiale correspondant à l'épaisseur de l'enveloppe externe (8) dont la tranche d'extrémité bute contre ledit épaulement (15), ledit épaulement (15) raccordant la surface externe cylindrique (13) du corps d'étanchéité (10) et la surface cylindrique externe (21) du talon d'ancrage (11), cependant que le corps d'étanchéité (10) et le talon d'ancrage (11) comportent des surfaces internes tronconiques respectivement (16-18-22) dans le prolongement les unes des autres et correspondant aux surfaces tronconiques externes (17-20-24) de l'emboîtement (6) sur lequel elles s'appliquent par compression radiale.

3. Joint d'étanchéité suivant la revendication 1 caractérisé en ce que le talon d'ancrage (11) de l'anneau d'étanchéité (2) comporte extérieurement, en saillie sur sa surface cylindrique externe (21) des lèvres ou dents triangulaires (23) et comporte intérieurement, en saillie sur sa surface tronconique interne (22) des lèvres ou dents (25) triangulaires, profilées en marches d'escalier, présentant du côté du corps (10) une face perpendiculaire à l'axe XX de l'anneau d'étanchéité (2).

4. Joint d'étanchéité selon la revendication 1 caractérisé en ce que la jupe de recouvrement (12) appartenant à l'anneau d'étanchéité (2) comporte sur sa surface interne (26), près de son extrémité, des saillies annulaires triangulaires (27) destinées à être écrasées sur la surface extérieure de l'enveloppe externe tubulaire (8) du tuyau composite (T1) lors de son recouvrement par la jupe (12).

5. Joint d'étanchéité suivant les revendications 1 et 4 caractérisé en ce que la jupe de recouvrement (12) est frettée sur l'enveloppe externe (8) du tuyau (T1) par une bague de serrage (3).

6. Joint d'étanchéité suivant la revendication 1 caractérisé en ce que, lors d'une déviation angulaire de l'un des tuyaux composites (T1) par rapport à l'autre tuyau composite (T2), le corps d'étanchéité (10) de l'anneau d'étanchéité (2) est une sorte de charnière élastique de flexion.

7. Joint d'étanchéité suivant la revendication 1 caractérisé en ce que, entre d'une part la bague d'extrémité (9) montée sur le bout mâle (5) pour limiter la couche de calorifugeage (7) à une de ses extrémités, et d'autre part la tranche d'extrémité de l'emboîtement (6) est interposée une entretoise annulaire (1) en matériau d'isolation thermique.

## Claims

1. A joint for sealing against external fluids, disposed between two composite insulated pipes (T1, T2), each comprising a cast pipe (4) with spigot end (5) and socket end (6) which can be assembled together telescopically with an interposed sealing ring (G) fluid-tight to the internal pressure of the fluid transported, each cast pipe (4) being insulated by an insulating layer (7) of thermally insulating material and the insulating layer (7) covering the major part of the length of each pipe (4) with the exception of the spigot end and the socket end, the insulating layer (7) being in its turn covered by an external, impermeable, protective tubular casing (8), said insulating layer (7) being also limited at each of its ends by an elastomeric sealing ring (9, 2), closing in a fluid-tight manner the annular space between the cast pipe (4) and the protective casing (8), this sealing joint being characterised in that one (2) of the sealing rings closing the annular space between a cast pipe (4) and its external protective tubular casing (8) at one end of the insulating layer (7) of one of the composite pipes (T2) comprises an anchoring flange (11) bearing on the outside surface (17-20-24) of the socket end (6) and compressed radially between the socket end (6) and the protective casing (8), then as a longitudinal extension of the anchoring flange (11) a sealing body (10) resting against the socket end (6) and aligned with the outside tubular casing (8), and finally as a longitudinal extension of the sealing body (10) a covering skirt (12) applied elastically, with clamping, to the end of the outside tubular casing (8) of the adjacent composite pipe (T1).

2. A joint for sealing according to Claim 1, characterised that the sealing body (10) of the sealing ring (2) comprises an outside cylindrical surface (13) flush with the outside surface of the outside tubular casing (8) and an outside shoulder (15) of radial height corresponding to the thickness of the outside casing (8), the end section whereof abuts with the said shoulder (15). said shoulder (15) connecting the outside cylindrical surface (13) of the sealing body (10) and the outside cylindrical surface (21) of the anchoring flange (11), whilst the sealing body (10) and the anchoring flange (11) comprise internal truncated surfaces respectively (16-18-22) as extensions of each other, and corresponding to the outside truncated surfaces (17-20-24) of the socket end (6) against which they rest by radial compression.

3. A joint for sealing according to Claim 1, characterised in that the anchoring flange (11) of the sealing ring (2) comprises externally, projecting onto its cylindrical outside surface (21), triangular lips or teeth (23) and comprises internally, projecting onto its truncated inside surface (22), triangular lips or teeth (25) shaped like steps, presenting from the side of the body (10) a face perpendicular to the axis XX of the sealing ring (2).

4. A joint for sealing according to Claim 1, characterised in that the covering skirt (12) belonging to the sealing ring (2) comprises on its inside surface (26), close to its end, triangular annular projections (27) intended to be crushed on the outside surface of the outside tubular casing (8) of the composite pipe (T1) when it is covered by the skirt (12).

5. A joint for sealing according to Claims 1 and 4, characterised in that the covering skirt (12) is fretted on the outside casing (8) of the pipe (T1) by a clamping ring (3).

6. A joint for sealing according to Claim 1, characterised in that, with an angular displacement of one of the composite pipes (T1) in relation to the other composite pipe (T2), the sealing body (10) of the sealing ring (2) is a type of flexible elastic hinge.

7. A joint for sealing according to Claim 1, characterised in that, between on the one hand the end ring (9) installed on the spigot end (5) to limit the insulating layer (7) at one of its ends, and on the other hand the socket end (6), there is inserted an annular spacer (1) of thermal insulating material.

**Patentansprüche**

1. Verbindung zwischen zwei zusammengesetzten wärmedämmenden Rohren (T1, T2) zur Abdichtung gegenüber äußeren Fluiden, wobei jedes zusammengesetzte Rohr ein Gußrohr (4) mit einem Einsteckende (5) und einem Muffenende (6) aufweist, die untereinander teleskopisch unter Zwischeneinlegen einer Dichtungsgarnitur (G) zur Dichtung gegenüber dem Innendruck des transportierten Fluids zusammensetzbar sind, wobei jedes Gußrohr (4) durch eine Schicht aus Dämmaterial (7) wärmegedämmt ist und die Schicht aus wärmedämmendem Material (7) den größten Teil der Lange eines jeden Rohrs (4) mit Ausnahme des Einsteckendes und des tulpenförmigen Muffenendes bedeckt, wobei die wärmedämmende Schicht (7) selbst mit einem äußeren undurchlässigen rohrförmigen Schutzmantel (8) umhüllt ist, wobei die wärmedämmende Schicht (7) außerdem an ihren Enden durch einen Dichtring aus einem Elastomer (9, 2) begrenzt ist, der den Ringraum zwischen dem Gußrohr (4) und dem Schutzmantel (8) dicht abschließt, dadurch gekennzeichnet, daß einer der Dichtringe (2), der den Ringraum zwischen dem Gußrohr (4) und seinem äußeren rohrförmigen Schutzmantel (8) verschließt, an einem Ende der wärmedämmenden Schicht (7) eines der zusammengesetzten Rohre (T2) einen Verankerungswulst (11), der auf der äußeren Fläche (17, 20, 24) der Muffe (6) aufliegt und radial zwischen der Muffe (6) und dem Schutzmantel (8) komprimiert ist, sowie in der longitudinalen Verlängerung der Verankerungswulst (11) ein Dichtkörper (10), der gegen die Muffe (6) angedrückt ist und gegenüber dem äußeren rohrförmigen Mantel (8) vorsteht sowie in der Verlängerung des Dichtkörpers (10) eine Überdeckungslippe (12) aufweist, die elastisch auf das Ende des äußeren rohrförmigen Mantels (8) des benachbarten zusammengesetzten Rohrs (T1) aufgespannt ist.

2. Dichtung nach Anspruch 1, dadurch gekennzeichnet, daß der Dichtkörper (10) des Dichtrings (2) eine äußere zylinderförmige Fläche (13) aufweist, die gegenüber dem äußeren Schutzmantel (8) vorsteht und eine äußere Schulter (15) mit einer Höhe, die der Dicke des äußeren Mantels (8) entspricht, dessen Ende an dieser Schulter (15) anliegt, wobei die Schulter (15) die äußere zylinderförmige Fläche (13) des Dichtkörpers (10) und die äußere zylinderförmige Fläche (21) des Verriegelungswulstes (11) verbindet, während der Dichtkörper (10) und der Verankerungswulst (11) innere kegelstumpfförmige Flächen (16, 18, 22) jeweils in der Verlängerung aufweisen und entsprechend den äußeren kegelstumpfförmigen Flächen (17, 20, 24) der Muffe (6), auf denen sie durch radiale Kompression aufliegen.

3. Dichtung nach Anspruch 1, dadurch gekennzeichnet, daß der Verankerungswulst (11) des Dichtrings (2) außen gegenüber der äußeren Zylinderfläche (21) vorstehende Lippen doer dreieckige Zähne (23) aufweist und innen gegenüber der kegelstumpfförmigen inneren Fläche (22) dreieckige Lippen oder Zähne (25) aufweist, die treppenstufenförmig profiliert sind und auf der Seite des Körpers (10) eine zur Achse XX senkrechte Fläche des Dichtrings (2) aufweisen.

4. Dichtung nach Anspruch 1, dadurch gekennzeichnet, daß die Überdeckungslippe (12), die zum Dichtring (2) gehört, auf ihrer Innenfläche (26) nahe ihrem Rand dreieckige ringförmige Vorsprünge (27) aufweist, die dazu bestimmt sind, auf die äußere Oberfläche des äußeren rohrförmigen Mantels (8) des zusammengesetzten Rohrs (10) gequetscht zu werden, während das Rohr von der Lippe (12) verdeckt wird.

5. Dichtung nach den Ansprüchen 1 und 4, dadurch gekennzeichnet, daß die Überdeckungslippe (12) auf den äußeren Mantel (8) des Rohrs (T1) durch einen Klemmring (3) frettiert ist.

6. Dichtung nach Anspruch 1, dadurch gekennzeichnet, daß während einer Winkelabweichung eines der zusammengesetzten Rohre (T1) bezüglich eines anderen zusammengesetzten Rohrs (T2) der Dichtkörper (10) des Dichtrings (2) ein biegeelastisches Scharnier bildet.

7. Dichtung nach Anspruch 1, dadurch gekennzeichnet, daß einerseits zwischen dem Endring (9), der auf dem Einsteckende (5) angeordnet ist, um die wärmedämmende Schicht (7) an einem ihrer Enden zu begrenzen und andrerseits zwischen dem Endbereich der Muffe (6) eine ringförmige Zwischenwand (1) aus einem thermischen Isolierstoff angeordnet ist.

Fig. 1

Fig. 2

0 204 113

Fig. 3

Fig. 4

Fig. 5